# EUROPEAN PATENT SPECIFICATION

(11) **EP 0 479 364 B1**
(45) Date of publication and mention of the grant of the patent: **26.05.1999**
(21) Application number: 91202453.6
(22) Date of filing: 23.09.1991
(51) Int. Cl.: G06F 17/30

(54) **Method of storing a topological network, and methods and apparatus for identifying series of 1-cells in a network stored by such a method**
Verfahren zur Speicherung eines topologischen Netzwerkes und Verfahren und Geräte, um eine Reihe von 1-Zellen zu identifizieren
Procédé pour stocker un réseau topologique, et méthode et appareil pour identifier un nombre de cellules-1

(30) Priority: 01.10.1990 EP 90202587
(43) Date of publication of application: 08.04.1992
(73) Proprietor: Mannesmann VDO Aktiengesellschaft, 60388 Frankfurt am Main (DE)
(72) Inventor: Janse, Cornelis Pieter, NL-5656 AA Eindhoven (NL); Driessen, Leonardus Maria Henricus Emiel, NL-5656 AA Eindhoven (NL)
(74) Representative: Schouten, Marcus Maria

(56) References cited:
- EP-A- 0 302 547
- EP-A- 0 306 075
- EP-A- 0 369 539
- AFIPS CONFERENCE PROCEEDINGS, NATIONAL COMPUTER CONFERENCE July 1984, LAS VEGAS, NEVADA, U.S.A. pages 695 - 706; M. SUGIE ET AL.: 'CARGuide-on-board computer for automobile route guidance'

## Description

The invention relates to a method of storing digital data representing a topological network, the network comprising a set of 0-cells (nodes) and a set of 1-cells and being divided into sections corresponding to discrete parcels of data for storage in a mass memory, a boundary node being defined at each point where the network traverses a boundary between sections, the parcel of data for a given section including a chain list record for each 1-cell in the section, which chain list record, at least in the case of a 1-cell terminating at non-boundary nodes, includes information for both 0-cells referring to the non-boundary nodes and which information refers to further 1-cells in the network terminating at the same non-boundary nodes.

Methods and apparatus as set forth above are described in the context of a road vehicle navigation system in EP-A1-0 306 075. An overview of the same navigation system is given in the article "CARIN, a car information and navigation system" by M.L.G. Thoone, published in Philips Technical Review, Volume 43, No. 11/12, December 1989, pages 317 to 329.

In the known system the chain list records for a given section identify 1-cells in neighbouring sections where the 1-cell terminates at a boundary node. This simplifies the task for the in-car apparatus in following a series of 1-cells that form a desired route, even across section boundaries. In many applications it will be preferable to concentrate the processing effort into the compilation of the database, so as to simplify (make cheaper) the use of the database. In a mass market application such as car navigation, this philosophy can exploit fully the properties of a cheap, very high density, but essentially read-only storage medium such as the Compact Disc.

Unfortunately, the need to identify 1-cells in neighbouring sections results in the chain list records occupying a large amount of memory space in the data parcels. This large memory space does not convey a correspondingly large amount of information, since only a small minority of the 1-cells referred to are outside the given section.

It is an aim of the present invention to reduce the volume of the network data, while at the same time maintaining or improving the information content. It is a further aim of the invention to enable and provide methods and apparatus for retrieving the stored data in an efficient manner.

The invention provides a method of storing data representing a topological network as set forth in the opening paragraph, characterized in that, for a 1-cell terminating at a boundary node, the information included in said 1-cell for the respective node contains an indicator (NIL) indicating that said node is a boundary node, and that the data parcel comprises further information (O-C') external to the chain list record of said 1-cell, which further information refers to a 1-cell outside the section of the network to which the parcel relates and terminating at the same boundary node. In such a method, the chain list records need only identify 1-cells uniquely within one section, and can consequently take up less space. Although a certain amount of information has been lost from the chain list records, this can be replaced elsewhere with an overall saving in memory size.

In one embodiment of the invention, the further information in the data parcel for a given section of the network includes a node list record for each node in the section, and the node list record for a boundary node in a given section includes a reference to a corresponding node in an adjacent section, and a thread pointer referring to a 1-cell in the given section, but also no direct reference to any 1-cell outside the given section. In this embodiment, there is no need at all to refer directly to 1-cells outside a given section in the topological description of that section, allowing a shorter reference for every 1-cell in the node list records as well as in the chain list records. A node list record for a non-boundary node will already include a reference (thread pointer) to a 1-cell within the section, in accordance with the known method. The only direct reference between sections becomes that between nodes.

The reference to the corresponding node may be an additional field in a longer node list record. While variable-length records are in general undesirable, it should be noted that the longer records (for boundary nodes) and the shorter records (for non-boundary nodes) can be grouped together, to minimize this inconvenience. Variable length chain list records could not be grouped so conveniently, since each refers in practice to two further 1-cells so that four different record formats would be required, depending on whether a 1-cell is terminated by zero, one or two boundary nodes.

In the above embodiment, the chain list record for a 1-cell may include references to a first and a second node cell which terminate the 1-cell and may further include corresponding first and second thread pointers each indicating a further 1-cell terminated by the first or second node cell respectively, except that where a node referred to in a chain list record is a boundary node and no further 1-cell in the same section remains to be indicated, the indicator indicating that the node is a boundary node includes a special pointer (NIL) in the space allocated for the thread pointer. The special pointer conveys only the information that the node is a boundary node, but it is a simple matter to identify the corresponding node in the adjacent section from the node list record for that node, and then to use the thread pointer in the node list record in the adjacent section to identify the further 1-cell beyond the section boundary.

In such an embodiment the further 1-cell indicated by each thread pointer in a chain list record may be chosen systematically by following a particular sense of rotation about the corresponding node, while the thread pointer in the node list record for each boundary node indicates the first 1-cell within the section, counting from the section boundary in the particular sense of rotation about the boundary node. Rotational ordering of 1-cell references is used in the known method to simplify following routes through the network. The embodiment described provides consistency of the rotational ordering across section boundaries, even though no direct references to 1-cells outside the given section are included in the data parcel for that section.

For a boundary node located on the boundary of three or more sections, the node list record may refer to the corresponding boundary node only in the section following next in the particular sense of rotation. This avoids the need to refer in the node list record to more than one corresponding node even though there may be any number of them, and the rotational ordering is again achieved in a manner consistent with that adopted in the known system. Such consistency allows the existing methods of finding routes through the network to be used reliably with the new database, with only a minor modification.

Information may be included in the data parcel linking the boundary nodes of a section in accordance with the sense of rotation opposite to the particular sense of rotation according to which the 1-cells are indicated by the thread pointers. Such information is useful for example when it is desired to truncate a 2-cell (area between 1-cells) using the section boundary. The information can be included with no increase in the amount of data, simply by ordering the node list records for the boundary nodes in accordance with the opposite sense of rotation. This is another example of how processing at the time of compiling the network database can both increase the information content of the database and simplify the use of the database.

The invention further provides a method of identifying a further 1-cell, given a current 1-cell and a direction of traversing that 1-cell in a topological network section represented by a data parcel stored in a mass memory in accordance with the invention as set forth above, the method comprising the steps of:
(a) finding in the chain list record for the current 1-cell the terminating node in the given direction of traversing the 1-cell; and
(b) looking in that chain list record for a reference to a further 1-cell leading from said terminating node; characterized in that step (b) includes alternatively looking for an indicator (NIL), indicating that said terminating node is a boundary node, and
that in case said indicator is found, a step(b1) is performed (709) in which step information (O-C'), referred to from and external to the chain list record, is consulted to locate a reference to the further 1-cell in the data parcel of an adjacent section (A-D) of the network.

The invention yet further provides methods of identifying a series of 1-cells which form a route through a topological network stored in accordance with the invention as set forth above, or which bound a particular 2-cell in the network. Such methods may exploit some or all of the rotational ordering features described above.

The invention yet further provides an apparatus for reading a topological database stored in a mass memory device in accordance with the invention as set forth above, the apparatus comprising:
- means for reading from a mass memory device a first data parcel representing a first section of a topological network;
- means for reading from the data parcel a chain list record corresponding to a 1-cell in the first section of the network, which chain list record contains in a situation where the 1-cell is terminated by a non-boundary node a reference to a further 1-cell in the first section which is also terminated by that node, or in a situation where the 1-cell is terminated by a boundary node an indicator of this latter situation and a reference to further information external to the chain list record;
- means responsive to the reading of the indicator in the chain list record for consulting said further information external to the chain list record to identify an adjacent second section of the network; and
- means for reading a second data parcel for the second section of the network and for using information in the second data parcel to identify a further 1-cell leading from the corresponding boundary node into the second section of the network.

Any or all of these means may conveniently comprise a processing device operating under control of program instructions read from the same mass memory device in which the network data parcels are stored.

Embodiments of the invention will now be described, by way of example, with reference to the accompanying drawings, in which:
Figure 1 shows a vehicle navigation system;
Figure 2 shows an example of a road network for storage in a mass memory;
Figure 3 shows four chain lists corresponding to respective sections of the network of Figure 2;
Figure 4 shows four node lists corresponding to respective sections of the network of Figure 2;
Figure 5 shows another network in which real nodes and boundary nodes coincide;
Figure 6 illustrates the treatment of the network of Figure 5 in a network database.

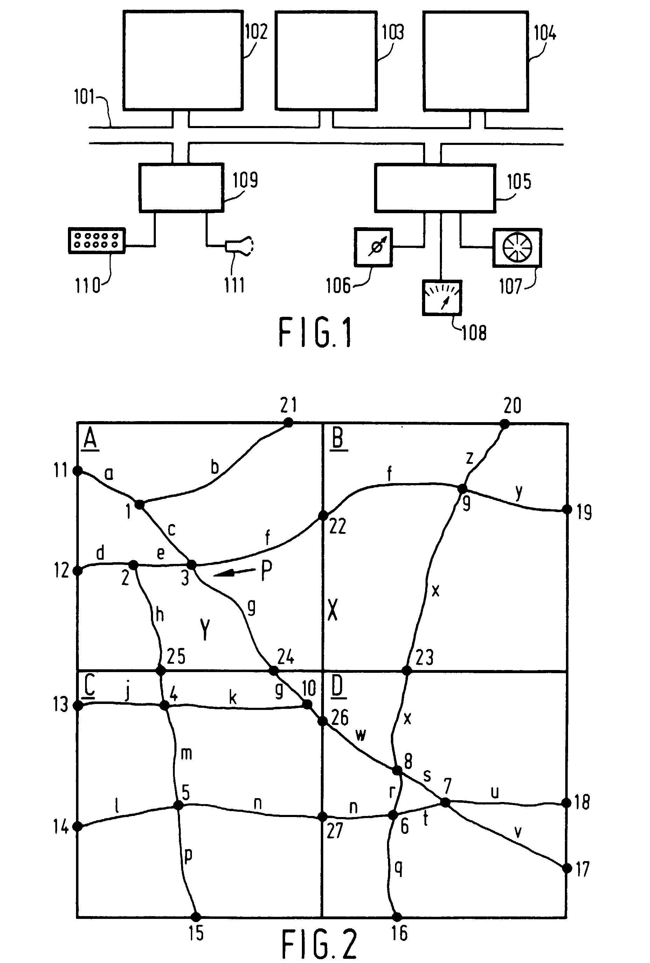

Figure 1 shows the components of a navigation system for a car. A microprocessor 102, a working memory 103 and a mass memory 104 communicate with one another via a bus 101. The working memory 103 comprises semiconductor memory with capacity of, for example 1 Mbyte. The mass memory 104 comprises in this example a Compact Disc Read-Only Memory (CD-ROM). The CD-ROM 104 has a capacity of approximately 600 Mbytes, in which are stored programs for controlling the microprocessor 102 and a database describing the road network of a country or other large area.

A first interface 105 connects the bus 101 to an electromagnetic compass 106, wheel sensors 107 and an odometer 108. The elements 106, 107 and 108 enable the system to determine the position of the vehicle by dead-reckoning in a known manner. Alternative or additional position transducers could be provided, of course, including receivers for satellite navigation or radio-beacon direction finding signals. A radio receiver (not shown) may also be connected for the reception of encoded traffic information signals.

A keyboard 110 and an output device 111 are connected to the bus 101 via a second interface 109. The keyboard is used by the user to enter starting position and destination information. The output device 111 provides information which may comprise a visual display and/or a speech output device, for supplying navigational instructions to the user.

An overview of such a navigation system is given by Thoone in the article cited above. The present description is chiefly concerned with the organization of the network database, so as to provide compact storage and efficient retrieval for route planning and so forth. Methods of route planning using such a database are known for example from EP-A1-0 360 075, cited above, and EP-A1-0 369 539.

The rate for reading data from a CD-ROM is approximately 150 Kbytes per second, and larger delays up to a second may be incurred when reading from widely-separated parts of the CD-ROM disc. Therefore, the database is divided into parcels and one or more parcels at a time are loaded into the working memory 3 whenever their data are needed by the microprocessor 2. With regard to the network database in the present embodiment, each parcel corresponds to a rectangular section of a road network. Methods for dividing a network into sections for compact storage and efficient retrieval are described for example in EP-A1-0 280 795. Each parcel may for example comprise a few sectors of the CD-ROM. Each such sector comprises approximately 2 Kbytes and corresponds to a frame (1/75 second) in the well-known CD-Digital Audio system.

Figure 2 shows an example of a topological network which has been divided into sections A, B, C and D for representation by respective parcels of a larger network database. The network of Figure 2 is the same as one described in EP-A1 0 360 075, cited above, to facilitate a comparison of the presently proposed database organization with that known from the reference.

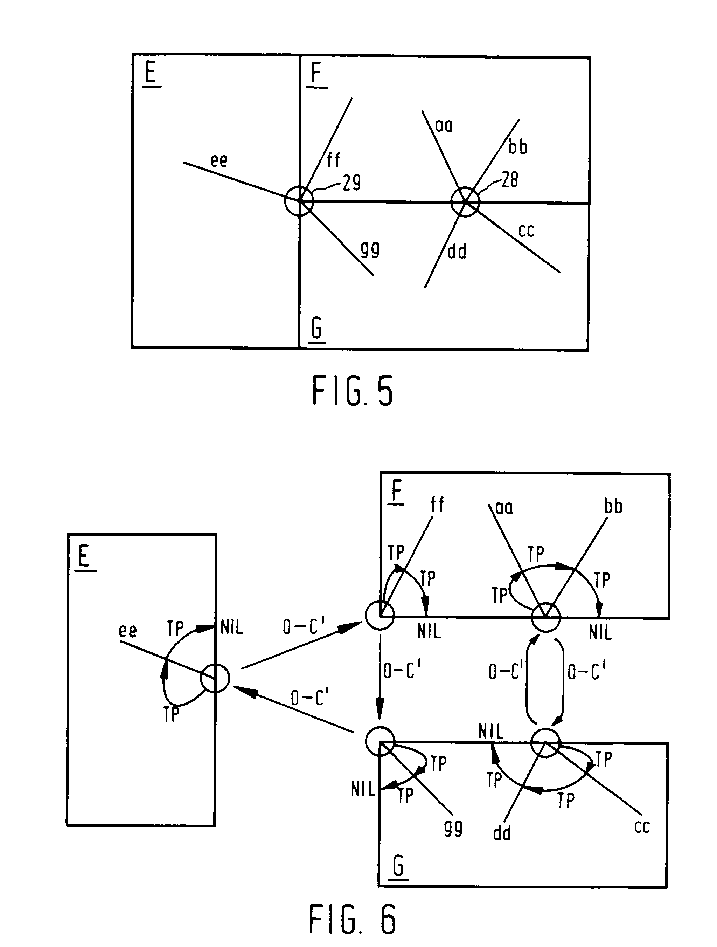

Nodes, referred to in topology as 0-cells, are indicated by reference numbers 1, 2, ... 27. "Real nodes" 1 through 10 represent road junctions in the network. Artificial "boundary nodes" 11 through 27 occur where a road segment is bisected by a section boundary. A real node may also be a boundary node, as described below with reference to Figures 5 and 6. Reference letters a, b, ... y, z indicate 1-cells of the network, which represent the segments of road joining the nodes of the network. Areas between 1-cells (road segments) are called 2-cells.

A data parcel to be stored for each section includes descriptions of the 0-cells, 1-cells and 2-cells of that section. A description of a 1-cell for example might include the name of the road and the type of road. To enable efficient navigation through the network, relational data are also to be stored. The relational data constitutes the topological definition of the network, including for example information that road segment e connects nodes 2 and 3, that node 22 in section A is the same as node 22 in section B, and that node 8 terminates road segments r, s, w and x. The efficient storage of this relational information, particularly as regards the section boundaries, forms the chief subject of the present disclosure.

The topological data for each section in the present embodiment comprises a chain list, having one record for each 1-cell in the section, and a node list having a record for each 0-cell in the section (including the boundary nodes). The principles of chain lists and node lists are known already from the article by Thoone and from EP-A1-0 360 075, both referred to above.

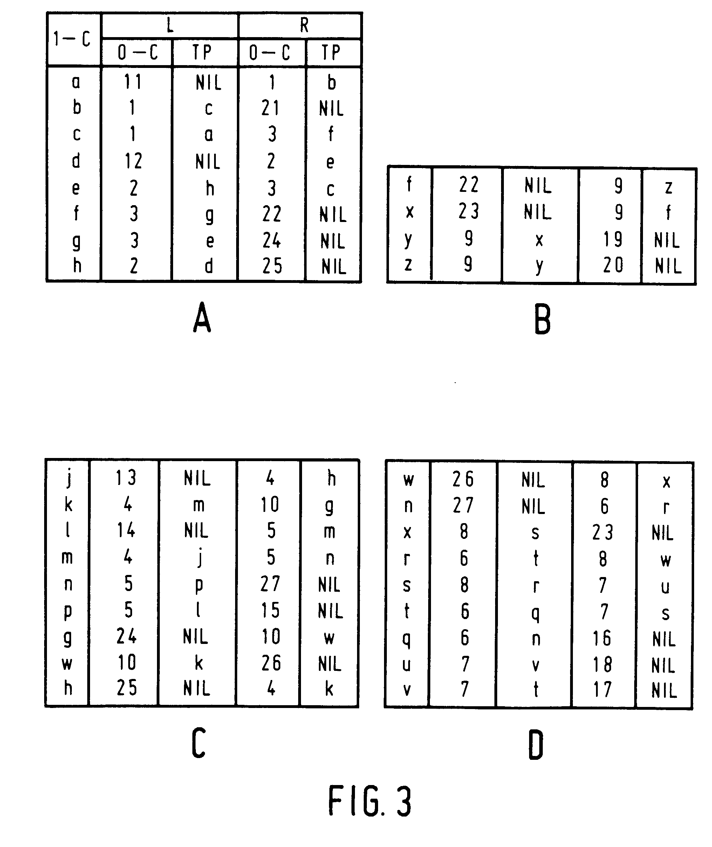

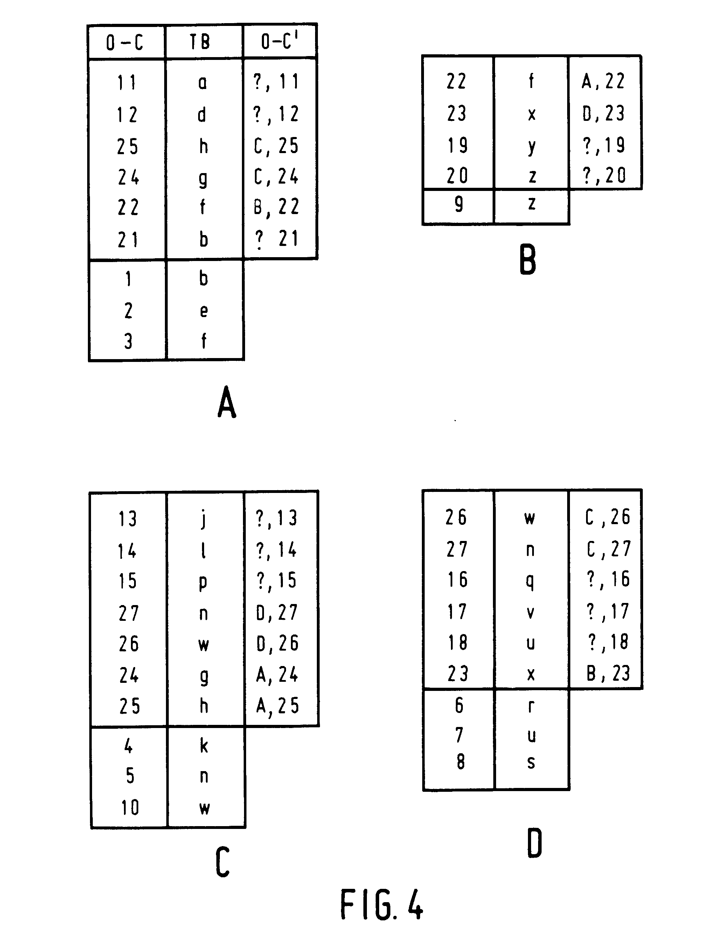

Figure 3 shows the chain lists for the sections A, B, C and D of the network of Figure 2, while Figure 4 shows the node lists. Considering for example the chain list for section A (Figure 3, A), a first field "1-C" in each record (row) identifies the 1-cell (road segment) to which the record relates. In this column, Figure 3 shows the reference letters a, b, ... h which identify the 1-cells relevant to section A. In practice, the field 1-C will contain pointers to locations in the data parcel where the remaining information decribing that 1-cell is stored. That information could alternatively be stored in a further field of the chain list record, so that the complete description of 1-cell can be located by a single pointer value.

The remaining four fields of the chain list record relate to the ends of the 1-cell, and are grouped in two pairs L and R, corresponding to the "beginning" and "end" of the 1-cell respectively. For the sake of establishing a convention, the left-most end of a 1-cell is called the "beginning", while the right-most end is called the "end", hence the references L and R. In the case of an exactly vertical 1-cell, then the upper end may be chosen to be the beginning.

Under L, a first field 0-C identifies the beginning 0-cell for the 1-cell, and a thread pointer TP identifies a further 1-cell which terminates at the same 0-cell. Fields 0-C and TP under R do the same for the end node of the 1-cell.

In accordance with a principle described in EP-A2-0 302 547, the thread pointers are chosen systematically following a particular sense of rotation (clockwise, in this embodiment) about their respective 0-cells (nodes). This can be illustrated by the record for 1-cell c in the chain list A of Figure 3. The beginning node for 1-cell c is node 1, as indicated under L, 0-C in the chain list record for which the field 1-C is "c". Another 1-cell joining 1-cell c at node 1 is the 1-cell a, as indicated by the thread pointer under L, TP. This 1-cell a was chosen because it is the first 1-cell at node 1 in a clockwise sense of rotation about the node 1, starting from the 1-cell c to which the record relates. All 1-cells terminating at node 1 can be found in this rotational order by following thread pointers TP under L or R until they point back to the starting 1-cell. Thus the record for 1-cell c points to 1-cell a, and the TP associated with node 1 in the record for 1-cell a points to 1-cell b. The TP associated with node 1 in the record for 1-cell b points back to 1-cell c, indicating that all 1-cells have been found which terminate at node 1.

In the node list A of Figure 4, the record for node 1 (third row from the bottom) need only specify one 1-cell, by means of a thread pointer TP. In the example of Figure 4, A, 1-cell b is identified by the thread pointer, TP for node 1, and the remaining 1-cells, c and a, can be identified in the clockwise order by following thread pointers through the chain list (Figure 3), as described above. For the sake of establishing a convention, the 1-cell indicated by the thread pointer in the node list record for a non-boundary node is chosen to be the first 1-cell in the clockwise sense of rotation, starting from the North (up) direction.

The use of a particular sense of rotation in allocating the chain-list thread pointers is not essential, provided that all 1-cells at a node are linked in a chain by thread pointers. The rotational ordering does however simplify processing for the in-car system when for example it is desired to identify all the 1-cells bounding a particular 2-cell, as described in EP-A2-0 302 547. It has been recognized in this context, that processing at the time of compiling the database can compress the database and, by use of ordering, can further increase the information content of a given volume of data. Such processing saves storage space in the CD-ROM and reduces the processing power and working memory required in the in-car system, providing a great cost and performance benefit to end-users of the database. Such techniques are particularly useful in association with a read-only storage device such as a CD-ROM. As the network changes by the addition of new roads and so on, the database can nevertheless be updated with special supplementary information until compilation of a new database on CD-ROM is justified. Such supplementary information could be supplied for example by local radio data broadcasts, or on magnetic disks or memory cards. For other databases, such as an on-line database for a telecommunications network, the compilation of a new database may be justified more frequently.

So far, the database organization as it relates to boundary nodes and associated 1-cells has not been described. The organization as described below with reference to Figures 3 to 6 exploits ordering in the compiled database to provide more information in less space than that achieved by the organization known from EP-A1-0 360 075, for example.

In the chain list records of Figure 3, no attempt is made to point to 1-cells in neighbouring sections (data parcels) by means of the thread pointers TP under L or R. Instead, where a node field 0-C indicates a boundary node, and the next 1-cell in the clockwise sense of rotation is a 1-cell in the neighbouring section, a special pointer NIL (the "nil-pointer") occupies the thread pointer field TP. This can be seen for example in the chain list for section A in the record for 1-cell f, wherein the field 0-C under R indicates the boundary node 22, and the thread pointer field TP under R is the nil-pointer.

Now, the nil-pointer conveys no information other than that the associated node is a boundary node and the next 1-cell clockwise is not in the present section. In one sense there is less information in the chain lists of Figure 3 than in the chain lists of the known organization. Against this, however, is a reduction in the necessary size of the thread pointer fields TP under L and R for all records in the chain list, since the 1-cells need only be identified uniquely within the current section. In other words, the information has been added to the chain list that all indicated 1-cells are within the current section.

It will be appreciated that in a practical database, with tens or hundreds of nodes in each section, the boundary nodes will be a minority of the total number of nodes. Therefore the space saved in the chain lists by adoption of the nil-pointer is greater than the information lost.

The lost information is replaced in the node lists of Figure 4 by providing longer records for (only) the boundary nodes. In order not to disrupt the format of the node lists excessively, the longer records and the normal (non-boundary) node records are grouped in two separate node lists. Again, it should be remembered that these longer records will be a small minority in a practical database. For example, in the CD-ROM-based car navigation system described, a parcel size giving 12 to 18 percent boundary nodes has been found satisfactory. Each boundary node gives rise to at least two long records, since it appears in at least two neighbouring sections.

The additional field 0-C' in the record for a boundary node identifies a neighbouring section (A, B, C, D etcetera), and the node in that neighbouring section's node list which is the same boundary node. Thus, the field 0-C' in the record for node 25 in the node list for section A identifies node 25 in section C. The symbol "?" is used for neighbouring sections not shown in Figure 2. Conversely, the field 0-C' for node 25 in the node list for section C refers to node 25 in section A. The situation where a boundary node appears in more than two sections will be discussed later, with reference to Figures 5 and 6.

The thread pointer field TP of each record for a boundary node in the node list points to the first 1-cell terminated by that node, counting clockwise from the section boundary. Thus, for example, traversing 1-cell f in section A, in the direction from L to R, one encounters the node 22 in field 0-C under R in the chain list record for 1-cell f. To continue the journey, one examines the thread pointer field TP under R in the chain list record for 1-cell f in section A. This thread pointer turns out to be a nil-pointer, so one looks to the node list record for the associated node 22. Field 0-C' in this node list record identifies the boundary node beyond the section boundary as being node 22 in section B. Turning to the node list for section B one finds the thread pointer field TP indicating 1-cell f of section B, which is indeed the desired continuation of 1-cell f in section A. The record for 1-cell f in the chain list for section B can then be used to continue following the route through section B of the network.

It may be noted that unique references 1 through 27 and a through z are given to the nodes and 1-cells in the entire network of Figure 2 for the purposes of this description only. In the database itself, a node or 1-cell need only be identified uniquely within its own section (data parcel).

Figures 5 and 6 illustrate one system for treating a real node which coincides with the boundary between two or more sections. In Figure 5, a small part of a network is shown, bridging three sections, E, F and G. At the boundary between sections F and G, a node 28 occurs, which terminates four 1-cells, aa, bb, cc and dd. Of these four 1-cells, aa and bb are in section F while cc and dd are in section G. A second node 29 coincides with the boundary intersection at which all three sections, E, F and G meet. Three 1-cells ee, ff and gg lead from this node into sections E, F and G respectively.

Figure 6 illustrates a compact and systematic ordering of the chain list and node list references describing this network, which provides maximal consistency with the organization as described already, even at these unusual nodes 28 and 29. In Figure 6, the three sections E, F and G have been separated, as indeed they are separated in respective parcels of the database. The reference signs for the 0-cells (nodes) 28 and 29 have been omitted for clarity, since these features are clearly recognizable by comparison with Figure 5.

What are shown in Figure 6 are the various pointers in the chain lists and node lists for the sections E, F and G which enable a route to be followed through the network rapidly and systematically, even across the section boundaries. An arcuate arrow labelled TP leading clockwise about a node from one 1-cell to another (as from aa to bb, or from cc to dd in Figure 6) represents the thread pointer field TP of the record in the chain list (Figure 3) for the first 1-cell (aa, cc), under L or R as appropriate.

When clockwise rotation about a node leads to a section boundary (as from 1-cell bb, for example) then the relevant thread pointer field in the chain list record for 1-cell bb contains the nil-pointer, as marked by the reference NIL in Figure 6. There is therefore no information leading directly from the 1-cell bb in section F to the 1-cell cc in section G. There is, however, indirect information.

A pointer labelled 0-C' in Figure 6, leading from a node 28 or 29 in a first section to its counterpart in a neighbouring section, is provided by the special field 0-C' of the record for the boundary node in the node list for the first section. For the boundary node in the neighbouring section a pointer labelled TP from the node to a 1-cell in the neighbouring section is provided by the field TP of the node list record for that node in the neighbouring section. For example, the field 0-C' for node 28 in the node list of section F points to the node 28 in section G, while the field TP for the node 28 in the node list of section C points to the 1-cell cc. The 1-cell cc is chosen because it is the first 1-cell leading from node 28 into section G, counting clockwise from the section boundary. Thus to get from 1-cell bb in the chain list of section F to the 1-cell cc is a two-step process of consulting the node lists for section F and then section G in response to the discovery of the nil-pointer in the chain list record for 1-cell bb in section F. The complete set of four 1-cells radiating from node 28 can be found in this manner, in the correct clockwise sequence aa, bb, cc, dd.

A similar situation applies to the node list and chain list records for node 29 in the three sections E, F and G. However, there are two possibilities for the pointer 0-C' in each section, since the record for node 29 in the node list of section E could refer to the node 29 in section F or in section G. It is proposed for the present embodiment again to order the choices according to the same particular sense of station as is used within the chain list itself, that is clockwise in this example. Thus the field 0-C' for node 29 in section E points to node 29 in section F, the field 0-C' in section F points to the node 29 in section G, and the field 0-C' in section G points to the node 29 in section E, completing the cycle. Thus, when following the pointers TP and 0-C' for the node 29 in the same manner as described above for node 28, the 1-cells ee, ff and gg will always be found in the clockwise order, just as if there were no boundaries at all.

In the case of rectangular sections, a boundary node might appear in 2, 3 or 4 different sections. For other-shaped sections, a node might appear in even more than 4 sections. The clockwise ordering system adopted at node 29 in Figure 6 can be extended infinitely enabling a consistent approach to database organization at all real and boundary nodes.

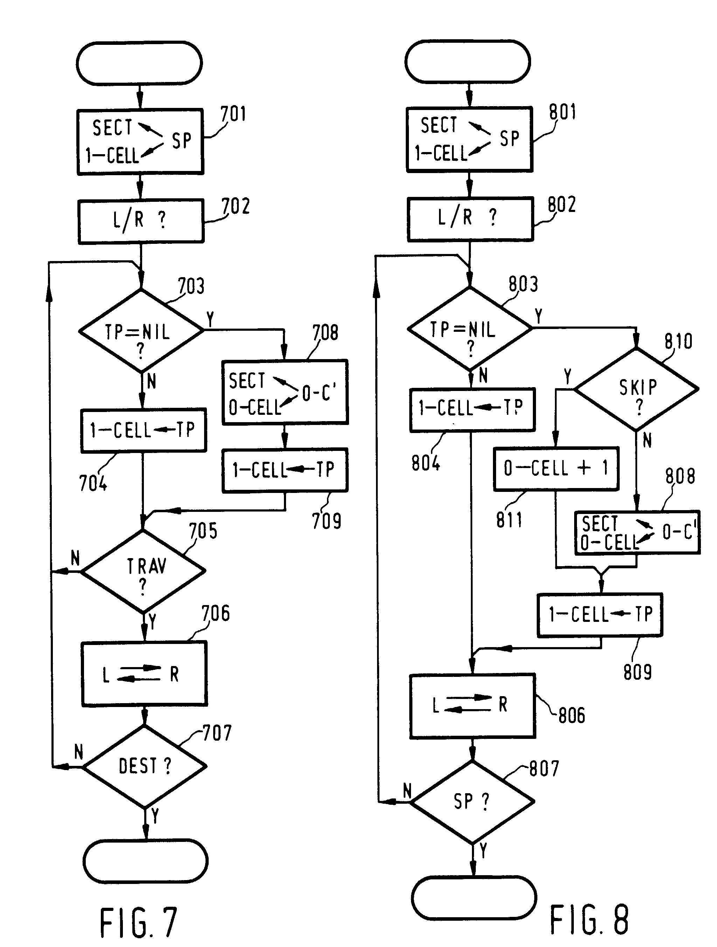

The flowchart of Figure 7 illustrates a method of tracing a route through a network which is stored in a database in the manner described above. Steps 701 to 709 of this method are described as follows.
701: SP is starting position. Identify current section and current 1-cell.
702: Identify direction of traversing 1-cell (towards the L node or the R node).
703: Is the chain list thread pointer at the node a nil-pointer?
704: If not, chain list thread pointer gives new 1-cell.
705: Should we traverse the new 1-cell (is it a part of our desired route)? If not return to 703, trying thread pointer for same node, new 1-cell.
706: If yes in 705, traverse new 1-cell to new node (from L to R or vice versa).
707: Is new node the destination? If not return to 703 with new node. If yes, end.
708: If yes in 703, node is boundary node. Field 0-C' in node list record gives new section, new node.
709: Thread pointer in node list record in new section gives new 1-cell. Continue with step 705 in new section.

A special case of path following occurs when it is desired to identify the chain of 1-cells that surrounds a particular 2-cell. When navigating a car, for example, the car many often deviate from the known network when it enters private land, or enters a newly-developed area not yet included in the database. In this situation, knowledge of all 1-cells surrounding the 2-cell is useful for detecting when and where the car returns to the known network.

With the database organization described above with reference to Figures 2 to 6, the problem of finding 2-cell boundaries is greatly simplified by the rotational ordering of 1-cells in the allocation of thread pointers, as described in EP-A2-0 302 547. Suppose, for example, that in the course of traversing the 1-cell g in section A, the car leaves the known road and enters the 2-cell containing the reference X in Figure 2. All the 1-cells bounding the 2-cell X can be found by first looking toward node 24 on 1-cell g, and then following a path through the network, always choosing to traverse the first 1-cell indicated by the thread pointer according to the clockwise sense of rotation.

This special case of the method of Figure 7 is represented by the flowchart of Figure 8. Ignoring for the moment the steps 810 and 811, the steps 801 to 809 corrrespond in function to the like-numbered steps 701-109 in Figure 7. Note however that there is no decision corresponding to step 705: the first 1-cell in the clockwise sense of rotation is always the desired one when tracing a 2-cell.

Further points to note in Figure 8 are that the L or R decision in step 802 is based not on any actual direction of traversing the 1-cell, but on which 2-cell it is desired to trace. The 2-cell X in the above example requires looking toward node 24 on 1-cell g, and node 24 is the 0-cell under R in the chain list record for 1-cell g (Figure 3, A). To trace the 2-cell referenced Y in Figure 2, starting from 1-cell g in section A, it is necessary in step 802 to look to node 3, which is the 0-cell under L in the chain list record for the 1-cell g.

Step 807 indicates that when tracing the boundary of a 2-cell, the destination is the starting point SP. The steps 803, 808 and 809 enable 2-cells to be traced across section boundaries, in the same way as the steps 703, 708 and 709 in the general case of Figure 7.

It will sometimes occur that a 2-cell is too large to be considered as a whole, or merely that most of it is not relevant. For example, if the car is currently at the point P in the network of Figure 2, the parts of the 2-cell X which are in sections B, C and D are hardly relevant to the immediate navigation problem. It may be that the data parcels for these sections are not even in the working memory. A single 2-cell might in some cases extend through so many sections that loading them all into the working memory is impossible. In such cases, the 2-cell must be "clipped" to a more reasonable area, and the question arises whether the section boundaries can be used to simplify such clipping.

Taking the 2-cell X in section A as an example, if one starts from 1-cell f, then the system is already aware of the boundary node 22, and can follow the path via node 3 to 1-cell g (and in general through any number of 1-cells), until the boundary node 24 is reached. At this point, the system could notionally connect nodes 24 and 22 and arrive at the complete boundary of the 2-cell X, within the section A.

In a more general case, however, two problems remain. Firstly, one does not always begin with knowledge of a boundary node and heading in the direction appropriate to the desired 2-cell. It is not easy to trace the path in the reverse direction. Secondly, there is no guarantee that some other 2-cell does not project into section A across the boundary between nodes 22 and 24.

These problems are solved in the embodiment described by ordering the records for the boundary nodes in the node lists. In each node list A, B, C and D in Figure 4, the boundary nodes are listed according to an anti-clockwise sense of rotation around the section boundary, that is the opposite sense to the clockwise order in which the thread pointers are chosen. By this means, when following a 2-cell boundary, the appropriate part of the section boundary can be included simply by skipping to the next boundary node (record) in the ordered boundary node list (Figure 4). For example, when tracing the boundary of 2-cell X and arriving at node 24, the section boundary can be used to clip the 2-cell by skipping to the next boundary node in the node list for section A, which is node 22. Because of the anti-clockwise ordering of boundary nodes, it is known that no other 2-cell projects across the boundary between nodes 24 and 22. At node 22, the thread pointer TP in the node list record for node 22 in section A can be used to continue along 1-cell f. In the entire process there has been no need to consult the data parcels describing sections B, C and D.

The skipping action is represented by steps 810 and 811 in Figure 8. In step 810, it is determined whether the area beyond the section boundary is relevant, or can be skipped. If it can be skipped, step 811 updates the current node to be the next one in the node list for the section. Of course, if the first boundary node is the last one in the node list (for example node 21 in section A), step 811 will look to the first record in the node list (node 11), rather than to the following, non-boundary node (node 1).

Rather than ordering the boundary node records in the node list, it would be sufficient of course that each boundary node record should contain a pointer to the next boundary node in the opposite (anti-clockwise) sense of rotation. Such a pointer occupies space, however, and the use of ordering exploites more fully the principle of concentrating the processing effort into the database compilation, thereby reducing the processing effort in the in-car system using the database.

Many variations of the described embodiments will be apparent to the skilled reader, and it will be further appreciated that the invention is applicable to a wide range of topological networks other than road networks, including for example other transport networks, telecommunications networks, and distribution networks for oil, gas, water etcetera.

## Claims

1. A method of storing digital data representing a topological network, the network comprising a set of 0-cells (11-27) (nodes) and a set of 1-cells (a-z) and being divided into sections (A-D) corresponding to discrete parcels of data for storage in a mass memory (104), a boundary node (22-27) being defined at each point where the network traverses a boundary between sections, the parcel of data for a given section including a chain list record (fig. 3) for each 1-cell in the section, which chain list record, at least in the case of a 1-cell terminating at non-boundary nodes, includes information for both 0-cells referring to the non-boundary nodes and which information refers to further 1-cells in the network terminating at the same non-boundary nodes, characterized in that, for a 1-cell terminating at a boundary node, the information included in said 1-cell for the respective node contains an indicator (NIL) indicating that said node is a boundary node, and that the data parcel comprises further information (O-C') external to the chain list record of said 1-cell, which further information refers to a 1-cell outside the section of the network to which the parcel relates and terminating at the same boundary node.

2. A method as claimed in Claim 1, wherein the further information in the data parcel for a given section of the network includes a node list record (fig. 4) for each node in the section, and wherein the node list record for a boundary node in a given section includes a reference (O-C') to a corresponding node in an adjacent section, and a thread pointer (TP) referring to a 1-cell in the given section, but also no direct reference to any 1-cell outside the given section.

3. A method as claimed in Claim 2, wherein the chain list record for a 1-cell includes references (O-C) to a first and a second node which terminate the 1-cell and further includes corresponding first and second thread pointers (TP) each indicating a further 1-cell terminated by the first or second node respectively, except that where a node referred to in a chain list record is a boundary node and no further 1-cell in the same section remains to be indicated, the indicator indicating that the node is a boundary node includes a special pointer (NIL) in the space allocated for the thread pointer.

4. A method as claimed in Claim 3 wherein the further 1-cell indicated by each thread pointer in a chain list record is chosen systematically by following a particular sense of rotation about the terminating node and wherein the thread pointer in the node list record for each boundary node indicates the first 1-cell within the section, counting from the section boundary in the particular sense of rotation about the boundary node (fig. 6).

5. A method as claimed in Claim 4 wherein for a boundary node located on the boundary of three or more sections, the node list record refers to the corresponding boundary node only in the section following next in the particular sense of rotation.

6. A method as claimed in Claim 4 or Claim 5 wherein the data parcel for a section of the network includes information (O-C') linking the boundary nodes in accordance with a sense of rotation around the section boundary which is opposite to the particular sense of rotation according to which the 1-cells are indicated by the thread pointers in the chain list records.

7. A method of identifying a further 1-cell (a-z), given a current 1-cell (a-z) and a direction of traversing that 1-cell in a topological network section (A-D) represented by a data parcel stored in a mass memory in accordance with any of Claims 1 to 6, the method comprising the steps of:
(a) finding (703) in the chain list record for the current 1-cell the terminating node (L,R) in the given direction of traversing the 1-cell; and
(b) looking (706) in that chain list record for a reference to a further 1-cell leading from said terminating node; characterized in
that step (b) includes alternatively looking for an indicator (NIL), indicating that said terminating node is a boundary node, and
that in case said indicator is found, a step(b1) is performed (709) in which step information (O-C'), referred to from and external to the chain list record, is consulted to locate a reference to the further 1-cell in the data parcel of an adjacent section (A-D) of the network.

8. A method as claimed in Claim 7, wherein the network data have been stored in accordance with any of Claims 2 to 6, wherein the step (b1) comprises consulting the node list record (fig. 4) for that terminating node to identify the corresponding node in an adjacent section of the network and using the thread pointer (TP) of the corresponding node list record in a data parcel representing the adjacent section to identify the further 1-cell leading from the corresponding node into the adjacent network section.

9. A method of identifying a series of 1-cells (a-z) forming a route through a topological network represented by data parcels stored in a mass memory (104) in accordance with any of Claims 1 to 6, given a current 1-cell and direction of traversing that 1-cell, the method comprising repeatedly finding a further 1-cell by a method in accordance with Claim 7 or Claim 8, each time making the further 1-cell a new current 1-cell, and each time traversing the current 1-cell only if it forms a part of the desired route.

10. A method of identifying a series of 1-cells (f,g,w,x) which bound a particular 2-cell (X) in a topological network stored in accordance with a method as claimed in any of Claims 4 to 7, the method comprising the steps of:
(c) choosing a first current 1-cell which bounds the particular 2-cell and choosing a direction so as to pass around the 2-cell in accordance with a sense of rotation opposite to the particular sense of rotation according to which the 1-cells are indicated by the thread pointers in the chain list records, and
(d) using a method as claimed in Claim 9 to identify a series of 1-cells, traversing the first 1-cell indicated by the thread pointer at each 0-cell until the first current 1-cell is reached again.

11. A method as claimed in Claim 10, wherein upon reaching a boundary node, it is determined whether the part of the particular 2-cell lying beyond the section boundary is of interest and, if that part is not of interest, the step (b) is replaced by a step (b2) (810) which comprises identifying the next following boundary node on the section boundary, in accordance with the said opposite sense of rotation around the 2-cell boundary, and using the node list record for said next following boundary node to identify a further 1-cell of the series within the section boundary.

12. An apparatus (102,103) for reading a topological database stored in a mass memory device (104) in accordance with a method as claimed in any of Claims 1 to 6, the apparatus comprising:
- means for reading from the mass memory device a first data parcel representing a first section of a topological network;
- means for reading from the data parcel a chain list record corresponding to a 1-cell (a-z) in the first section (A-D) of the network, which chain list record contains in a situation where the 1-cell is terminated by a non-boundary node a reference to a further 1-cell in the first section which is also terminated by that node, or in a situation where the 1-cell is terminated by a boundary node an indicator (NIL) of this latter situation and a reference to further information (O-C') external to the chain list record;
- means responsive to the reading of the indicator in the chain list record for consulting said further information external to the chain list record to identify an adjacent second section (A-D) of the network; and
- means for reading a second data parcel for the second section (A-D) of the network and for using information in the second data parcel to identify a further 1-cell leading from the corresponding boundary node into the second section of the network.

## Patentansprüche

1. Verfahren zur Speicherung von digitalen Daten, die ein topologisches Netzwerk darstellen, wobei das Netzwerk eine Gruppe von 0-Zellen (11-27) (Knotenpunkten) und eine Gruppe von 1-Zellen (a-z) umfaßt und in Abschnitte (A-D) unterteilt ist, die diskreten Datenparzellen zur Speicherung in einem Massenspeicher (104) entsprechen, wobei ein Grenzknotenpunkt (22-27) an jedem Punkt definiert ist, an dem das Netzwerk eine Grenze zwischen Abschnitten überquert, wobei die Datenparzelle für einen bestimmten Abschnitt einen Kettenlisten-Datensatz (Figur 3) für jede 1-Zelle in dem Abschnitt enthält und dieser Kettenlisten-Datensatz zumindest im Fall einer 1-Zelle, die an Nicht-Grenzknotenpunkten endet, Informationen für beide 0-Zellen enthält, die sich auf die Nicht-Grenzknotenpunkte beziehen und wobei diese Informationen auf weitere 1-Zellen in dem Netzwerk verweisen, die an den gleichen Nicht-Grenzknotenpunkten enden, dadurch gekennzeichnet, daß für eine 1-Zelle, die an einem Grenzknotenpunkt endet, die in der genannten 1-Zelle für den betreffenden Knotenpunkt enthaltenen Informationen einen Indikator (NIL) enthalten, der angibt, daß es sich bei dem genannten Knotenpunkt um einen Grenzknotenpunkt handelt; und dadurch, daß die Datenparzelle weitere Informationen (O-C') außerhalb des Kettenlisten-Datensatzes der genannten 1-Zelle enthält, wobei diese weiteren Informationen auf eine 1-Zelle außerhalb des Netzwerkabschnitts verweisen, auf den sich die Parzelle bezieht, und die an dem gleichen Grenzknotenpunkt endet.

2. Verfahren nach Anspruch 1, wobei die weiteren Informationen in der Datenparzelle für einen bestimmten Abschnitt des Netzwerks einen Knotenpunktlisten-Datensatz (Figur 4) für jeden Knotenpunkt in dem Abschnitt enthalten, und wobei der Knotenpunktlisten-Datensatz für einen Grenzknotenpunkt in einem bestimmten Abschnitt einen Verweis (0-C') auf einen entsprechenden Knotenpunkt in einem benachbarten Abschnitt sowie einen verkettenden Zeiger (TP) enthält, der auf eine 1-Zelle in dem bestimmten Abschnitt verweist, aber auch keinen direkten Verweis auf eine 1-Zelle außerhalb des bestimmten Abschnitts.

3. Verfahren nach Anspruch 2, wobei der Kettenlisten-Datensatz für eine 1-Zelle Verweise (0-C) auf einen ersten und einen zweiten Knotenpunkt enthält, die die 1-Zelle beenden, und außerdem entsprechende erste und zweite verkettende Zeiger (TP) enthält, die jeweils eine weitere 1-Zelle angeben, welche durch den ersten bzw. durch den zweiten Knotenpunkt beendet wird, mit der Ausnahme, daß wo ein Knotenpunkt, auf den in einem Kettenlisten-Datensatz verwiesen wird, ein Grenzknotenpunkt ist und keine weitere 1-Zelle in dem gleichen Abschnitt anzugeben bleibt, der Indikator, der angibt, daß es sich bei dem Knotenpunkt um einen Grenzknotenpunkt handelt, einen speziellen Zeiger (NIL) an der dem verkettenden Zeiger zugewiesenen Stelle enthält.

4. Verfahren nach Anspruch 3, wobei die weitere 1-Zelle, die durch jeden verkettenden Zeiger in einem Kettenlisten-Datensatz angegeben wird, systematisch gewählt wird, indem einer bestimmten Drehrichtung um den beendenden Knotenpunkt gefolgt wird, während der verkettende Zeiger in dem Knotenpunktlisten-Datensatz für jeden Grenzknotenpunkt die erste 1-Zelle innerhalb des Abschnitts angibt, wobei von der Abschnittgrenze in der bestimmten Drehrichtung um den Grenzknotenpunkt gezählt wird (Figur 6).

5. Verfahren nach Anspruch 4, wobei der Knotenpunktlisten-Datensatz bei einem Grenzknotenpunkt, der sich auf der Grenze von drei oder mehr Abschnitten befindet, nur auf den entsprechenden Grenzknotenpunkt in dem Abschnitt verweist, der als nächstes in der bestimmten Drehrichtung folgt.

6. Verfahren nach Anspruch 4 oder 5, wobei die Datenparzelle für einen Abschnitt des Netzwerks Informationen (0-C') enthält, die die Grenzknotenpunkte entsprechend der Drehrichtung um die Abschnittgrenze miteinander verknüpfen, die zu der bestimmten Drehrichtung, nach der die 1-Zellen durch die verkettenden Zeiger in den Kettenlisten-Datensätzen angegeben werden, entgegengesetzt ist.

7. Verfahren zum Identifizieren einer weiteren 1-Zelle (a-z) bei einer gegebenen aktuellen 1-Zelle (a-z) und einer Richtung zum Durchqueren dieser 1-Zelle in einem topologischen Netzwerkabschnitt (A-D), der durch eine Datenparzelle dargestellt ist, welche in einem Massenspeicher entsprechend einem der Ansprüche 1 bis 6 gespeichert ist, wobei das Verfahren die folgenden Schritte umfaßt:
(a) in dem Kettenlisten-Datensatz für die aktuelle 1-Zelle den beendenden Knotenpunkt (L, R) in der bestimmten Richtung der Durchquerung der 1-Zelle auffinden (703); und
(b) in diesem Kettenlisten-Datensatz nach einem Verweis auf eine weitere 1-Zelle suchen,
die von dem genannten beendenden Knotenpunkt ausgeht (706); dadurch gekennzeichnet, daß Schritt (b) alternativ die Suche nach einem Indikator (NIL) umfaßt, der angibt, daß der genannte beendende Knotenpunkt ein Grenzknotenpunkt ist, und
daß, falls der genannte Indikator gefunden wird, ein Schritt (b1) durchgeführt wird (709), in dem Informationen (O-C'), auf die von dem Kettenlisten-Datensatz und außerhalb des Kettenlisten-Datensatzes verwiesen wird, benutzt werden, um einen Verweis auf die weitere 1-Zelle in der Datenparzelle eines benachbarten Abschnitts (A-D) des Netzwerks zu lokalisieren.

8. Verfahren nach Anspruch 7, wobei die Netzwerkdaten entsprechend einem der Ansprüche 2 bis 6 gespeichert wurden, wobei der Schritt (b1) das Konsultieren des Knotenpunktlisten-Datensatzes (Figur 4) für diesen beendenden Knotenpunkt umfaßt, um den entsprechenden Knotenpunkt in einem benachbarten Abschnitt des Netzwerks zu identifizieren, und die Benutzung des verkettenden Zeigers (TP) des entsprechenden Knotenpunktlisten-Datensatzes in einer Datenparzelle, die den benachbarten Abschnitt darstellt, um die weitere 1-Zelle zu identifizieren, die von dem entsprechenden Knotenpunkt in den benachbarten Netzwerkabschnitt führt.

9. Verfahren zum Identifizieren einer Reihe von 1-Zellen (a-z), die eine Strekke durch ein topologisches Netzwerk bilden, das durch Datenparzellen dargestellt wird, die entsprechend einem der Ansprüche 1 bis 6 in einem Massenspeicher (104) gespeichert wurden, bei einer gegebenen aktuellen 1-Zelle und der Richtung der Durchquerung dieser 1-Zelle, wobei das Verfahren das wiederholte Finden einer weiteren 1-Zelle entsprechend einem Verfahren nach Anspruch 7 oder Anspruch 8 umfaßt, wobei jedesmal die weitere 1-Zelle zu einer neuen aktuellen 1-Zelle gemacht wird und jedesmal die aktuelle 1-Zelle nur durchquert wird, wenn sie einen Teil der gewünschten Route bildet.

10. Verfahren zum Identifizieren einer Reihe von 1-Zellen (f, g, w, x), die eine bestimmte 2-Zelle (X) in einem topologischen Netzwerk abgrenzen, das entsprechend einem Verfahren nach einem der Ansprüche 4 bis 7 gespeichert ist, wobei das Verfahren die folgenden Schritte umfaßt:
(c) Wählen einer ersten aktuellen 1-Zelle, die die bestimmte 2-Zelle begrenzt, und Wählen einer Richtung, um die 2-Zelle in einer Drehrichtung zu umkreisen, die derjenigen Drehrichtung entgegengesetzt ist, nach der die 1-Zellen durch die verkettenden Zeiger in den Kettenlisten-Datensätzen angegeben werden, und
(d) Anwenden eines Verfahrens nach Anspruch 9, um eine Reihe von 1-Zellen zu identifizieren, wobei die erste 1-Zelle, die durch den verkettenden Zeiger bei jeder 0-Zelle angegeben wird, durchquert wird, bis die erste aktuelle 1-Zelle wieder erreicht ist.

11. Verfahren nach Anspruch 10, wobei bei Erreichen eines Grenzknotenpunktes ermittelt wird, ob der Teil der bestimmten 2-Zelle, welcher jenseits der Abschnittgrenze liegt, von Interesse ist, und - wenn dieser Teil nicht von Interesse ist - der Schritt (b) ersetzt wird durch Schritt (b2) (810), in dem der nächstfolgende Grenzknotenpunkt auf der Abschnittgrenze entsprechend der genannten entgegengesetzten Drehrichtung um die 2-Zellen-Grenze herum identifiziert wird und in dem der Knotenpunktlisten-Datensatz für den genannten nächsten folgenden Grenzknotenpunkt benutzt wird, um eine weitere 1-Zelle der Reihe innerhalb der Abschnittgrenze zu identifizieren.

12. Gerät (102, 103) zum Lesen einer topologischen Datenbank, die entsprechend einem Verfahren nach einem der Ansprüche 1 bis 6 in einer Massenspeichervorrichtung (104) gespeichert ist, wobei das Gerät folgendes umfaßt:
- Mittel, um aus einer Massenspeichervorrichtung eine erste Datenparzelle zu lesen, die einen ersten Abschnitt eines topologischen Netzwerks darstellt;
- Mittel, um aus der Datenparzelle einen Kettenlisten-Datensatz zu lesen, der einer 1-Zelle (a-z) in dem ersten Abschnitt (A-D) des Netzwerks entspricht, wobei der Kettenlisten-Datensatz in einem Fall, in dem die 1-Zelle durch einen Nicht-Grenzknotenpunkt beendet wird, einen Verweis auf eine weitere 1-Zelle in dem ersten Abschnitt enthält, die ebenfalls durch diesen Knotenpunkt beendet wird, oder in einem Fall, in dem die 1-Zelle durch einen Grenzknotenpunkt beendet wird, einen Indikator (NIL) für diesen letztgenannten Fall und einen Verweis auf weitere Informationen (0-C') außerhalb des Kettenlisten-Datensatzes enthält;
- Mittel, die auf das Lesen des Indikators in dem Kettenlisten-Datensatz reagieren, um die genannten weiteren Informationen außerhalb des Kettenlisten-Datensatzes zu konsultieren, um einen benachbarten zweiten Abschnitt (A-D) des Netzwerks zu identifizieren; und
- Mittel, um eine zweite Datenparzelle für den zweiten Abschnitt (A-D) des Netzwerks zu lesen und um Informationen in der zweiten Datenparzelle zu nutzen, um eine weitere 1-Zelle zu identifizieren, die von dem entsprechenden Grenzknotenpunkt in den zweiten Abschnitt des Netzwerks führt.

## Revendications

1. Procédé de stockage de données numériques représentant un réseau topologique, le réseau comprenant un jeu de cellules 0 (11 à 27) (noeuds) et un jeu de cellules 1 (a à z) et étant divisé en sections (A à D) correspondant à des paquets discrets de données à stocker dans une mémoire de masse (104), un noeud limitrophe (22 à 27) étant défini à chaque point où le réseau traverse une limite entre des sections, le paquet de données pour une section donnée comprenant un enregistrement de liste de chaîne (Fig. 3) pour chaque cellule 1 dans la section, lequel enregistrement de liste de chaîne, au moins dans le cas d'une cellule 1 se terminant à des noeuds non limitrophes, comprend des informations pour les deux cellules 0 faisant référence aux noeuds non limitrophes et lesquelles informations font référence à d'autres cellules 1 dans le réseau se terminant aux mêmes noeuds non limitrophes, caractérisé en ce que, pour une cellule 1 se terminant à un noeud limitrophe, les informations comprises dans ladite cellule 1 pour le noeud respectif contiennent un indicateur (NIL) indiquant que ledit noeud est un noeud limitrophe, et en ce que le paquet de données comprend d'autres informations (O-C') en dehors de l'enregistrement de liste de chaîne de ladite cellule 1, lesquelles autres informations font référence à une cellule 1 extérieure à la section du réseau à laquelle le paquet renvoie et se terminant au même noeud limitrophe.

2. Procédé suivant la revendication 1, dans lequel les autres informations dans le paquet de données pour une section donnée du réseau comprennent un enregistrement de liste de noeud (Fig. 4) pour chaque noeud dans la section, et dans lequel l'enregistrement de liste de noeud pour un noeud limitrophe dans une section donnée comprend une référence (O-C') à un noeud correspondant dans une section adjacente, et un pointeur de cheminement TP faisant référence à une cellule 1 dans la section donnée, mais également aucune référence directe à une quelconque cellule 1 extérieure à la section donnée.

3. Procédé suivant la revendication 2, dans lequel l'enregistrement de liste de chaîne pour une cellule 1 comprend des références (O-C) à un premier et à un deuxième noeuds qui terminent la cellule 1 et comprend en outre des premier et deuxième pointeurs TP correspondants indiquant chacun une autre cellule 1 terminée respectivement par le premier ou le deuxième noeud, à ceci prés que, lorsqu'un noeud auquel il est fait référence dans un enregistrement de liste de chaîne est un noeud limitrophe et qu'il ne reste aucune autre cellule 1 dans la même section à indiquer, l'indicateur indiquant que le noeud est un noeud limitrophe comprend un pointeur spécial (NIL) dans l'espace attribué au pointeur TP.

4. Procédé suivant la revendication 3, dans lequel l'autre cellule 1 indiquée par chaque pointeur TP dans un enregistrement de liste de chaîne est choisie systématiquement en suivant un sens de rotation particulier autour du noeud de terminaison et dans lequel le pointeur TP dans l'enregistrement de liste de noeud pour chaque noeud limitrophe indique la première cellule 1 à l'intérieur de la section, en comptant à partir de la limite de section dans le sens de rotation particulier autour du noeud limitrophe (Fig. 6).

5. Procédé suivant la revendication 4, dans lequel, pour un noeud limitrophe situé sur la limite de trois ou plus de trois sections, l'enregistrement de liste de noeud ne fait référence au noeud limitrophe correspondant que dans la section immédiatement suivante dans le sens de rotation particulier.

6. Procédé suivant la revendication 4 ou la revendication 5, dans lequel le paquet de données pour une section du réseau comprend des informations (O-C') reliant les noeuds limitrophes suivant un sens de rotation autour de la limite de section qui est opposé au sens de rotation particulier suivant lequel les cellules 1 sont indiquées par les pointeurs TP dans les enregistrements de liste de chaîne.

7. Procédé d'identification d'une autre cellule 1 (a à z), étant donné une cellule 1 actuelle (a à z) et une direction de traversée de cette cellule 1 dans une section de réseau topologique (A-D), représentée par un paquet de données stocké dans une mémoire de masse suivant l'une quelconque des revendications 1 à 6, le procédé comprenant les étapes consistant à :
(a) trouver (703) dans l'enregistrement de liste de chaîne pour la cellule 1 actuelle le noeud de terminaison (L, R) dans la direction de traversée donnée de la cellule 1, et
(b) rechercher (706) dans cet enregistrement de liste de chaîne une référence à une autre cellule 1 partant dudit noeud de terminaison, caractérisé en ce que
l'étape (b) comprend, en variante, la recherche d'un indicateur (NIL), indiquant que ledit noeud de terminaison est un noeud limitrophe, et
en ce que, dans le cas où ledit indicateur est trouvé, une étape (b1) est exécutée (709), étape au cours de laquelle des informations (O-C'), auxquelles il est fait référence à partir de l'enregistrement de liste de chaîne et en dehors de celui-ci, sont consultées pour situer une référence à l'autre cellule 1 dans le paquet de données d'une section adjacente (A-D) du réseau.

8. Procédé suivant la revendication 7, dans lequel les données de réseau ont été stockées suivant l'une quelconque des revendications 2 à 6, dans lequel l'étape (b1) comprend la consultation de l'enregistrement de liste de noeud (Fig. 4) pour ce noeud de terminaison pour identifier le noeud correspondant dans une section adjacente du réseau et l'utilisation du pointeur TP de l'enregistrement de liste de noeud correspondant dans un paquet de données représentant la section adjacente pour identifier l'autre cellule 1 allant du noeud correspondant dans la section de réseau adjacente.

9. Procédé d'identification d'une série de cellules 1 (a à z) formant un itinéraire à travers un réseau topologique représenté par des paquets de données stockés dans une mémoire de masse (104) suivant l'une quelconque des revendications 1 à 6, étant donné une cellule 1 actuelle et une direction de traversée de cette cellule 1, le procédé comprenant la localisation répétée d'une autre cellule 1 par un procédé suivant la revendication 7 ou la revendication 8, faisant chaque fois de l'autre cellule 1 une nouvelle cellule 1 actuelle, et ne traversant chaque fois la cellule 1 actuelle que si elle fait partie de l'itinéraire souhaité.

10. Procédé d'identification d'une série de cellules 1 (f, g, w, x) qui délimitent une cellule 2 particulière (X) dans un réseau topologique stocké selon un procédé suivant l'une quelconque des revendications 4 à 7, le procédé comprenant les étapes consistant à :
(c) choisir une première cellule 1 actuelle qui délimite la cellule 2 particulière et à choisir une direction de façon à passer autour de la cellule 2 suivant un sens de rotation opposé au sens de rotation particulier selon lequel les cellules 1 sont indiquées par les pointeurs TP dans les enregistrements de liste de chaîne, et
(d) utiliser un procédé suivant la revendication 9 pour identifier une série de cellules 1, traversant la première cellule 1 indiquée par le pointeur TP à chaque cellule 0 jusqu'à ce que la première cellule 1 actuelle soit à nouveau atteinte.

11. Procédé suivant la revendication 10, dans lequel, lorsqu'un noeud limitrophe est atteint, on détermine si oui ou non la partie de la cellule 2 particulière se trouvant au-delà de la limite de section est digne d'intérêt et, si cette partie n'est pas digne d'intérêt, l'étape (b) est remplacée par une étape (b2) (810) qui comprend l'identification du noeud limitrophe immédiatement suivant sur la limite de section, selon ledit sens de rotation opposé autour de la limite de cellule 2, et l'utilisation de l'enregistrement de liste de noeud pour ledit noeud limitrophe immédiatement suivant pour identifier une autre cellule 1 de la série à l'intérieur de la limite de section.

12. Appareil (102, 103) pour lire une base de données topologique stockée dans une dispositif de mémoire de masse (104) selon un procédé suivant l'une quelconque des revendications 1 à 6, l'appareil comprenant :
- des moyens pour lire à partir du dispositif de mémoire de masse un premier paquet de données représentant une première section d'un réseau topologique;
- des moyens pour lire à partir du paquet de données un enregistrement de liste de chaîne correspondant à une cellule 1 (a à z) dans la première section (A à Z) du réseau, lequel enregistrement de liste de chaîne contient, dans une situation dans laquelle la cellule 1 se termine par un noeud non limitrophe, une référence à une autre cellule 1 dans la première section qui se termine également par ce noeud, ou, dans une situation dans laquelle la cellule 1 se termine par un noeud limitrophe, un indicateur (NIL) de cette dernière situation et une référence à d'autres informations (O-C') en dehors de l'enregistrement de liste de chaîne;
- des moyens réagissant à la lecture de l'indicateur dans l'enregistrement de liste de chaîne pour consulter lesdites autres informations en dehors de l'enregistrement de liste de chaîne pour identifier une deuxième section adjacente (A-D) du réseau, et
- des moyens pour lire un deuxième paquet de données pour la deuxième section (A-D) du réseau et pour utiliser les informations dans le deuxième paquet de données pour identifier une autre cellule 1 allant du noeud limitrophe correspondant dans la deuxième section du réseau.
